# EUROPEAN PATENT SPECIFICATION

(11) **EP 2 930 704 B1**
(45) Date of publication and mention of the grant of the patent: **02.05.2018**
(21) Application number: 15159236.7
(22) Date of filing: 16.03.2015
(51) Int. Cl.: G08C 17/00, H04L 12/28

(54) **METHOD AND DEVICE FOR REMOTE INTELLIGENT CONTROL**
VERFAHREN UND VORRICHTUNG ZUR FERNGESTEUERTEN INTELLIGENTEN STEUERUNG
PROCÉDÉ ET DISPOSITIF DE COMMANDE INTELLIGENTE À DISTANCE

(30) Priority: 08.04.2014 CN 201410141371
(43) Date of publication of application: 14.10.2015
(73) Proprietor: Xiaomi Inc., Beijing 100085 (CN)
(72) Inventor: Zhang, Pengfei, Haidian District (CN); Chen, Yong, Haidian District (CN); Wang, Yidong, Haidian District (CN); Guo, Hongwei, Haidian District (CN)
(74) Representative: Reeve, Nicholas Edward

(56) References cited:
- WO-A1-2013/184250
- WO-A2-2011/053008
- JP-A- 2008 140 141
- US-A1- 2014 081 433

## Description

### TECHNICAL FIELD

The present disclosure generally relates to the field of intelligent control technology, and particularly to a method and a device for remote intelligent control.

### BACKGROUND

Household appliances have become indispensible electrical equipment for daily lives. Traditional household appliances are controlled through push buttons or remotely controlled through infrared remote controllers. With the development of times, such control methods for traditional home appliances cannot meet user's demands for controlling household appliances any more.

Following this trend, a concept of smart home is put forward. The so-called smart home refers to integrating appliances related to a household on a platform of a housing, by utilizing integrated wiring technology, network communication technology, security technology, automatic control technology, audio and video technology, and building a highly efficient management system for residential facilities and household daily affairs, to improve safety, convenience, comfort and artistry of the household lives and to achieve an eco-friendly living environment. This concept has been widely considered to be an inevitable trend of future development in household appliances.

US 2014/081433 A1 relates to a system for managing home appliances in which a push service with respect to status information of a home appliance is provided. Responses to the push message ensure a stable implementation.

WO 2011/053008 A2 discloses a method for controlling a home network system using a mobile terminal, whereby the mobile terminal connects to a gateway of a home network through a communications network.

### SUMMARY

A method and a device for remote intelligent control are provided by embodiments of the present disclosure.
(1) According to a first aspect of embodiments of the present disclosure, there provides a method for remote intelligent control, including: acquiring a trigger event; generating a notification message according to the trigger event; pushing the notification message to at least one first terminal; receiving a control instruction returned by the at least one first terminal, wherein the control instruction is generated according to the notification message; and controlling a second terminal corresponding to the control instruction according to the control instruction; wherein the step of pushing the notification message to the at least one first terminal comprises pushing the notification message to at least a first terminal corresponding to the trigger event, according to the trigger event, such that notification messages are respectively pushed to different terminals, depending on different trigger events.
(2) Optionally, a correlation list between different types of notification messages and different first terminals is preset in the router, the notification messages are classified in the router, and respective notification messages are pushed to the corresponding first terminals, according to the correlation list.
(3) Optionally, the acquiring the trigger event includes: receiving a status information of the second terminal sent from the second terminal; determining whether the status information of the second terminal satisfies a trigger condition for the trigger event; and acquiring the trigger event according to the status information of the second terminal, if the status information of the second terminal satisfies the trigger condition for the trigger event; or, determining whether a preset trigger condition for the trigger event is satisfied; and acquiring a preset trigger event, if the preset trigger condition for the trigger event is satisfied.
(4) Optionally, the generating the notification message according to the trigger event includes: determining whether the trigger event belongs to a preset trigger event push list; and generating the notification message according to the trigger event, if the trigger event belongs to the preset trigger event push list.
(5) Optionally, the notification message includes contents of a video, a picture and/or a text that is acquired according to the trigger event.
(6) Optionally, the router is in a same LAN environment with the second terminal.
(10) According to a second aspect of embodiments of the present disclosure, there provides a router for remote intelligent control, including: a trigger event acquiring module, configured to acquire a trigger event; a notification message generation module, configured to generate a notification message according to the trigger event; a notification message pushing module, configured to push the notification message to at least one first terminal; a control instruction receiving module, configured to receive a control instruction returned by the at least one first terminal, wherein the control instruction is generated according to the notification message; and a terminal control module, configured to control a second terminal corresponding to the control instruction according to the control instruction, wherein the pushing module configured to push the notification message to the at least one first terminal is further configured to push the notification message to at least a first terminal corresponding to the trigger event, according to the trigger event, such that notification messages are respectively pushed to different terminals, depending on different trigger events.
(11) Optionally, the trigger event acquiring module includes: a first event acquiring unit, and/or, a second event acquiring unit, wherein the first event acquiring unit includes: a first terminal status receiving unit, configured to receive status information of the second terminal sent from the second terminal; a first trigger event determination unit, configured to determine whether the status information of the second terminal satisfies a trigger condition for the trigger event; and a first trigger event acquiring unit, configured to acquire the trigger event according to the status information of the second terminal, if the status information of the second terminal satisfies the trigger condition for the trigger event; and the second event acquiring unit includes: a second trigger event determination unit, configured to determine whether a preset trigger condition for the trigger event is satisfied; and a second trigger event acquiring unit, configured to acquire a preset trigger event, if the preset trigger condition for the trigger event is satisfied.
(12) Optionally, the notification message generation module includes: a trigger event screen unit, configured to determine whether the trigger event belongs to a preset trigger event push list; and a notification message generation unit, configured to generate the notification message according to the trigger event, if the trigger event belongs to the preset trigger event push list.
(13) Optionally, the notification message pushing module includes: a first notification pushing unit, and/or, a second notification pushing unit, wherein the first notification pushing unit is configured to push the notification message to at least one preset first terminal; and the second notification pushing unit is configured to push the notification message to at least one first terminal corresponding to the trigger event according to the trigger event.
(14) Optionally, the notification message includes contents of a video, a picture and/or a text that is acquired according to the trigger event.
(15) Optionally, the router is in a same LAN environment with the second terminal.
(21) According to a third aspect of the embodiments of the present disclosure, there provides a computer program, which when executing on a processor of a router, performs a method of the first aspect of the embodiments of the present disclosure.

Some advantageous effects of the technical solutions provided by the embodiments of the present disclosure may include: through the router, a trigger event of a second terminal is acquired and a corresponding notification message is generated according to the trigger event. Then, the notification message is pushed to a first terminal at a remote location through the router. The first terminal at the remote location receives the notification message pushed from the router, and learns a trigger event acquired by the router. The first terminal generates a corresponding control instruction according to the notification message, and returns the control instruction to the router. A remote control on a second terminal that sends the trigger event is achieved through the router. Through the above method for remote intelligent control, a function of remote intelligent control may be achieved through the router by the user. The method for remote intelligent control may enrich control manners on household appliances, and provide technical basis for achieving a smart home.

It should be understood that, the above general description and the detailed description below are merely exemplary, and do not limit the disclosure.

### BRIEF DESCRIPTION OF THE DRAWINGS

In order to illustrate the technical resolutions of the embodiments of the disclosure more clearly, a brief introduction may be given hereinafter to the accompany drawings that may be used in the description of the embodiments. The drawings in the description below are merely for illustrating some embodiments of the present disclosure.
Fig.1 is an exemplary flow chart showing a method for remote intelligent control according to an exemplary embodiment;
Fig.2A is a first exemplary flow chart showing steps of acquiring a trigger event according to another exemplary embodiment;
Fig.2B is a second exemplary flow chart showing steps of acquiring a trigger event according to another exemplary embodiment;
Fig.3 is an exemplary flow chart showing steps of generating a notification message according to another exemplary embodiment;
Fig.4 is an exemplary flow chart showing a method for remote intelligent control according to an exemplary embodiment;
Fig.5A is a first exemplary flow chart showing steps of generating a control instruction according to another exemplary embodiment;
Fig.5B is a second exemplary flow chart showing steps of generating a control instruction according to another exemplary embodiment;
Fig.6 is a block diagram showing a router for remote intelligent control according to an exemplary embodiment;
Fig.7 is a block diagram showing a terminal for remote intelligent control according to an exemplary embodiment;
Fig.8 is a schematic view showing an interface of a terminal for remote intelligent control according to an exemplary embodiment; and
Fig.9 is a block diagram showing a device for remote intelligent control according to an exemplary embodiment.

Through the above accompany drawings, the specific embodiments of the disclosure have been shown, for which a more detailed description will be given as below. These drawings and textual description are not intended to limit the scope of the concept of the disclosure in any manner, but to explain the concept of the disclosure to those skilled in the art through particular embodiments.

### DETAILED DESCRIPTION

In order to make the objectives, technical solutions and advantages of the present disclosure more clear, the present disclosure will be described in further detail with reference to the accompanying drawings. The illustrated embodiments are not intended to limit the definition of the invention which is provided by the claims. Other embodiments within the definition of the invention will be apparent to those skilled in the art without exercising any inventive skill.

First of all, it should be noted that, in each of the embodiments of the present disclosure, an electronic device involved may be a mobile phone, a tablet computer, an e-book reader, a MP3 (a Moving Picture Experts Group Audio Layer III) player, a MP4 (Moving Picture Experts Group Audio Layer IV) player, a portable laptop computer or a desktop computer, and the like.

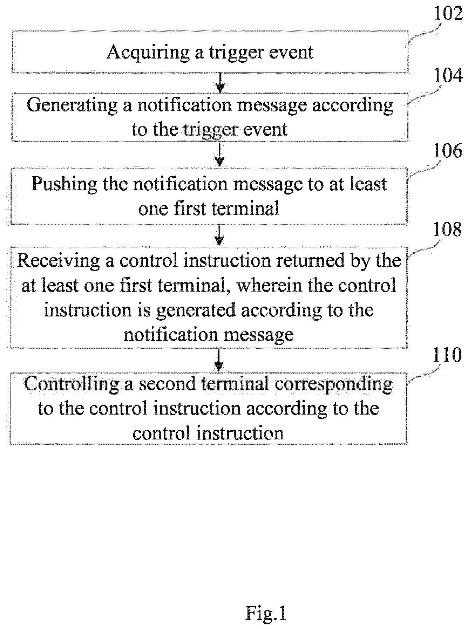

Fig.1 is an exemplary flow chart showing a method for remote intelligent control according to an exemplary embodiment. This embodiment is illustrated by taking a method for remote intelligent control used in a router for example. The method for remote intelligent control includes the following steps.

In step 102, a trigger event is acquired.

In step 104, a notification message is generated according to the trigger event.

In step 106, the notification message is pushed to at least one first terminal.

In step 108, a control instruction returned by at least one first terminal is received, wherein the control instruction is generated according to the notification message.

In step 110, a second terminal corresponding to the control instruction is controlled according to the control instruction.

Accordingly, in the method for remote intelligent control provided by this embodiment, through a router, a trigger event of a second terminal is acquired and a corresponding notification message is generated according to the trigger event. Then, the notification message is pushed to a first terminal at a remote location through the router. The notification message may be received and a corresponding control instruction may be returned based on the notification message from a user through the first terminal. A corresponding second terminal is controlled according to the control instruction by the router. Through the above method for remote intelligent control, a function of remote intelligent control may be achieved through the router by the user. The method for remote intelligent control may enrich control manners on household appliances, and provide technical basis for achieving a smart home.

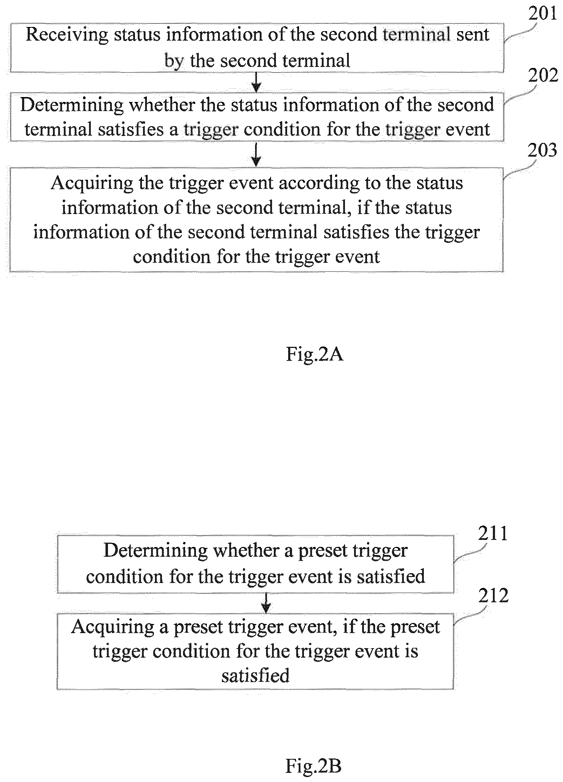

Fig.2A is a first exemplary flow chart showing steps of acquiring a trigger event according to another exemplary embodiment. As shown in Fig.2A, the steps of acquiring a trigger event may include the following steps.

In step 201, status information of the second terminal sent from the second terminal is received.

The second terminal may be a household appliance in the same LAN (Local Area Network) environment with the router, such as an air conditioner, a television, a water heater, a camera or a computer terminal, and the like. Generally, these terminal devices may autonomously detect their own status and a condition of the environment. For example, an air conditioner may detect a temperature of a room space, and a water heater may detect a current temperature of the water, and so on. Such a terminal device may send the detected relevant status information to the router through the LAN.

The second terminal may also be a server or other terminal coupled to the router through the Internet. For example, a user sets the TV series Man From the Stars as a follow-up target, and when a new episode of the TV series is updated on a server that provides video resources, information of the episode may be sent to the router through the Internet.

In step 202, it is determined whether the status information of the second terminal satisfies a trigger condition for the trigger event.

In step 203, if the status information of the second terminal satisfies the trigger condition for the trigger event, the trigger event is acquired according to the status information of the second terminal.

The trigger condition may be preset for status information of the second terminal by the user. Only when the status information of the second terminal satisfies the relevant trigger condition, it is determined to be a trigger event. For example, the user sets water temperature lower than 50°C as a trigger condition, and when the status information sent from the water heater indicates that the water temperature is lower than 50°C, it is determined to be a triggering event. The corresponding trigger events are acquired according to respective status information sent from respective terminals.

Fig.2B is a second exemplary flow chart showing steps of acquiring a trigger event according to another exemplary embodiment. As shown in Fig.2B, the steps of acquiring a trigger event may include the following steps.

In step 211, it is determined whether a preset trigger condition for the trigger event is satisfied.

In step 212, if the preset trigger condition for the trigger event is satisfied, a preset trigger event is acquired.

The trigger event may be triggered by a trigger condition preset from the user, besides being triggered by status information sent from the second terminal. For example, the user sets in the router that a reminder message needs to be pushed on April 8 which is his wife's birthday. In this case, when the router detects that the current time satisfies the preset trigger condition preset from the user, the preset trigger event is acquired.

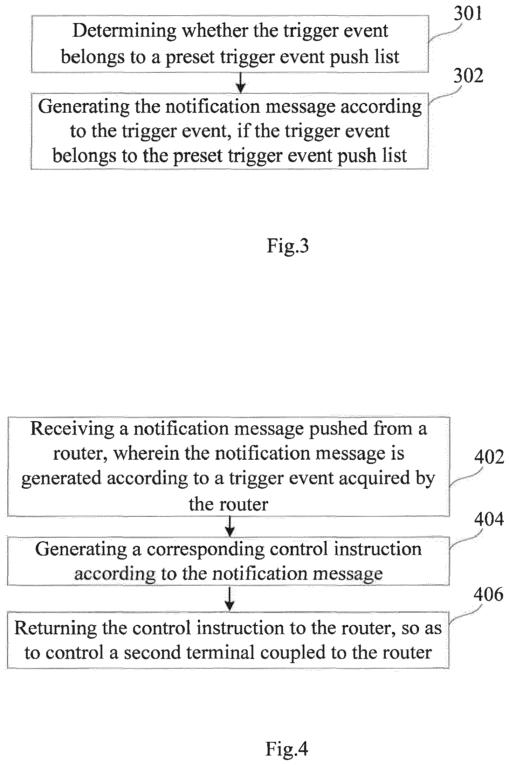

Fig.3 is an exemplary flow chart showing steps of generating a notification message according to another exemplary embodiment. As shown in Fig.3, the steps of generating a notification message may include the following steps.

In step 301, it is determined whether the trigger event belongs to a preset trigger event push list.

In step 302, if the trigger event belongs to the preset trigger event push list, the notification message is generated according to the trigger event.

Since there is a large quantity of triggering events that may be acquired, but only a few triggering events practically need to be notified to the user that they need to be pushed and used for a remote intelligent control. Thus, a preset trigger event push list is provided by this embodiment. Trigger events which need to be notified that they need to be pushed may be preset in the list by the user. After the router acquires a trigger event, it is determined whether the trigger event belongs to the preset trigger event push list. Only if it belongs to the list, a notification message will be generated for the trigger event. Thereby, the trigger events which do not need to be notified may be are shielded.

The notification message may be pushed to at least one preset first terminal at a remote location.

In addition, the notification message may be respectively pushed to different first terminals, depending on different trigger events. A correlation list between different types of notification messages and different first terminals may be preset in the router. The notification messages are classified in the router according to notification messages, and a respective notification messages are pushed to the corresponding first terminals, according to the above mentioned list.

The notification message includes contents of a video, a picture and/or a text that are acquired according to the trigger event.

Fig.4 is an exemplary flow chart showing a method for remote intelligent control according to an exemplary embodiment. This embodiment is illustrated by taking the method for remote intelligent control used in a terminal for example. The method for remote intelligent control includes the following steps.

In step 402, a notification message pushed from a router is received, wherein the notification message is generated according to a trigger event acquired by the router.

In step 404, a corresponding control instruction is generated according to the notification message.

In step 406, the control instruction is returned to the router, so as to control a second terminal coupled to the router.

Accordingly, in the method for remote intelligent control provided by this embodiment, a terminal at a remote location receives a notification message pushed from a router, and learns a trigger event acquired by the router. The terminal generates a corresponding control instruction according to the notification, and returns the control instruction to the router. A remote control on a second terminal which sends the trigger event is achieved through the router. Through the above method for remote intelligent control, a function of remote intelligent control may be achieved through the router by the user. The method for remote intelligent control may enrich control manners on household appliances, and provide technical basis for achieving a smart home.

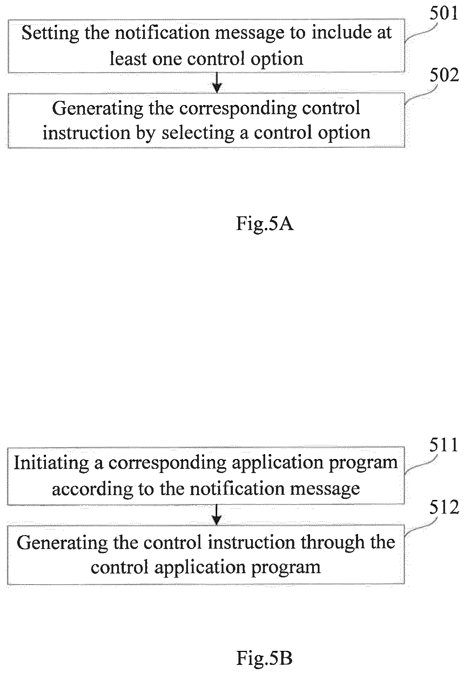

Fig.5A is a first exemplary flow chart showing steps of generating a control instruction according to another exemplary embodiment. As shown in Fig.5A, the steps of generating a corresponding control instruction according to the notification message may include the following steps.

In step 501, the notification message is set to include at least one control option.

In step 502, the corresponding control instruction is generated by selecting the control option.

In this embodiment, the notification message generated by the router includes at least one preset control option. At the same time when the terminal presents the notification message, the corresponding control option is also presented to the user. When the user reads the notification message, the corresponding control instruction may be generated by selecting a corresponding control option by the user.

For example, a water heater detects status information of its water temperature that is lower than 50°C. The router acquires this trigger event and generates a notification event which includes two control options "turn on the water heater" and "turn off the water heater". When the user reads this notification message, two buttons respectively for the two control options "turn on the water heater" and "turn off the water heater" are displayed in the notification message. The corresponding control instruction may be generated by clicking the button for the corresponding control option by the user.

For another example, through status information of the environment provided by an environment monitor indoor or a public environment index publishing platform, the router acquires a trigger event that a PM2.5 index is above a critical level, and generates a notification message that includes two control options "turn on the air purifier" and "turn off the air purifier". When the user reads this notification message, two buttons respectively for the two control options "turn on the air purifier" and "turn off the air purifier" are displayed in the notification message. The corresponding control instruction may be generated by clicking the button for the corresponding control option by the user.

Fig.5B is a second exemplary flow chart showing steps of generating a control instruction according to another exemplary embodiment. As shown in Fig.5B, the steps of generating a corresponding control instruction according to the notification message may include the following steps.

In step 511, a corresponding application program is initiated according to the notification message.

In step 512, the control instruction is generated through the control application program.

In this embodiment, a corresponding control application program is installed in the terminal. The corresponding control application program may be initiated according to the notification message. The corresponding control instruction may be generated by setting a control parameter through the control application program by the user.

For example, an air conditioner detects a status information of a room temperature that is higher than 30°C. The router acquires the trigger event, and generates a notification message which includes type information that indicates the notification message is a notification message about the air conditioner. A control application program for the air conditioner is installed in the terminal of the user. When the user reads the notification message, if the notification message is clicked, the terminal may initiate the control application program automatically according to the relevant type information in the notification message. Through the control application program, the user may set relevant parameters about the air conditioner such as "temperature", "air volume", "power mode", and the like, to form final control parameters. The control application program for the air conditioner generates a corresponding control instruction according to the final control parameters.

Besides the relevant control parameters, the control instruction may also include contents of a video, a picture and/or a text. The relevant contents may be acquired by the terminal by calling a corresponding application program, which will not be repeated herein.

Accordingly, in the method for remote intelligent control provided by this embodiment, through the router, a trigger event of a second terminal is acquired and a corresponding notification message is generated according to the trigger event. Then, the notification message is pushed to a first terminal at a remote location through the router. The first terminal at the remote location receives the notification message pushed from the router, and learns the trigger event acquired by the router. The first terminal generates a corresponding control instruction according to the notification message, and returns the control instruction to the router. A remote control on a second terminal that sends the trigger event is achieved through the router. Through the above method for remote intelligent control, a function of remote intelligent control may be achieved through the router by the user. The method for remote intelligent control may enrich control manners on household appliances, and provide technical basis for achieving a smart home.

Hereinafter, embodiments of an apparatus configured to perform the method according to the embodiments of the present disclosure will be described. The details which are not disclosed herein may be referred to the embodiments of the method.

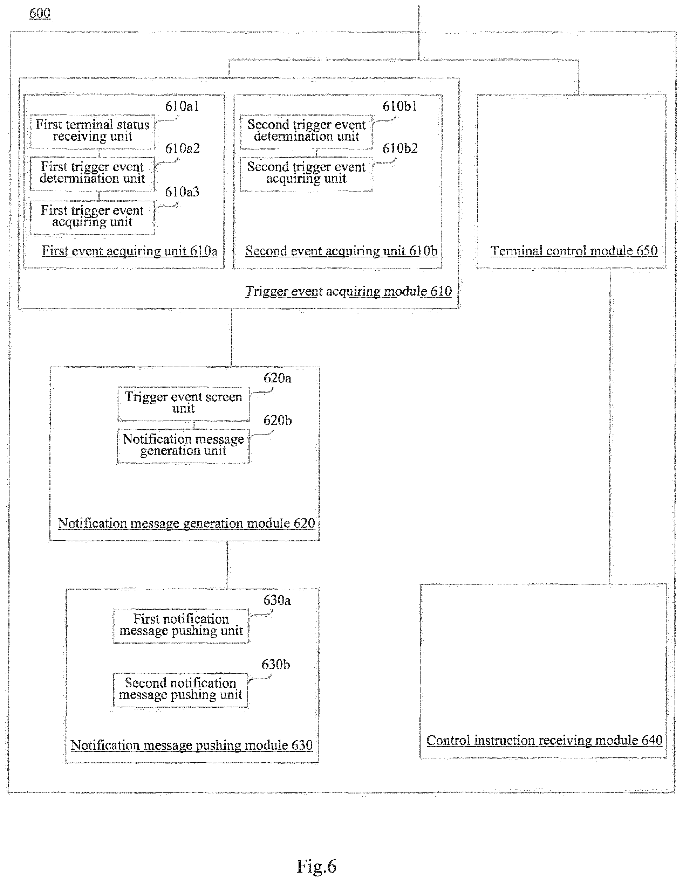

Fig.6 is a block diagram showing a router for remote intelligent control according to an exemplary embodiment. The router for remote intelligent control may be implemented with software, hardware or a combination of the both, as a part or whole of an electronic device. The router 600 for remote intelligent control may include: a trigger event acquiring module 610, a notification message generation module 620, a notification message pushing module 630, a control instruction receiving module 640 and a terminal control module 650.

The trigger event acquiring module 610 is configured to acquire a trigger event.

The notification message generation module 620 is configured to generate a notification message according to the trigger event.

The notification message pushing module 630 is configured to push the notification message to at least one first terminal.

The control instruction receiving module 640 is configured to receive a control instruction returned by at least one first terminal, wherein the control instruction is generated according to the notification message.

The terminal control module 650 is configured to control a second terminal corresponding to the control instruction according to the control instruction.

Optionally, the trigger event acquiring module 610 may include: a first event acquiring unit 610a, and/or, a second event acquiring unit 610b.

The first event acquiring unit 610a includes:
a first terminal status receiving unit 610a1, configured to receive status information of the second terminal sent from the second terminal;
a first trigger event determination unit 610a2, configured to determine whether the status information of the second terminal satisfies a trigger condition for the trigger event; and
a first trigger event acquiring unit 610a3, configured to acquire the trigger event according to the status information of the second terminal, if the status information of the second terminal satisfies the trigger condition for the trigger event.

The second event acquiring unit 610b includes:
a second trigger event determination unit 610b1, configured to determine whether a preset trigger condition for the trigger event is satisfied; and
a second trigger event acquiring unit 610b2, configured to acquire a preset trigger event, if the preset trigger condition for the trigger event is satisfied.

Optionally, the notification message generation module 620 includes:
a trigger event screen unit 620a, configured to determine whether the trigger event belongs to a preset trigger event push list; and
a notification message generation unit 620b, configured to generate the notification message according to the trigger event, if the trigger event belongs to the preset trigger event push list.

Optionally, the notification message pushing module 630 includes: a first notification message pushing unit 630a, and/or, a second notification message pushing unit 630b.

The first notification message pushing unit 630a is configured to push the notification message to at least one preset first terminal.

The second notification message pushing unit 630b is configured to push the notification message to at least one first terminal corresponding to the trigger event according to the trigger event.

Optionally, the notification message includes contents of a video, a picture and/or a text that is acquired according to the trigger event.

Optionally, the router is in the same LAN environment with the second terminal.

Accordingly, in the router for remote intelligent control provided by this embodiment, through the router, a trigger event of a second terminal is acquired and a corresponding notification message is generated according to the trigger event. Then, the notification message is pushed to a first terminal at a remote location through the router. The notification message may be received and a corresponding control instruction may be returned based on the notification message from a user through the first terminal. A corresponding second terminal is controlled according to the control instruction by the router. Through the above method for remote intelligent control, a function of remote intelligent control may be achieved through the router by the user. The method for remote intelligent control may enrich control manners on household appliances, and provide technical basis for achieving a smart home.

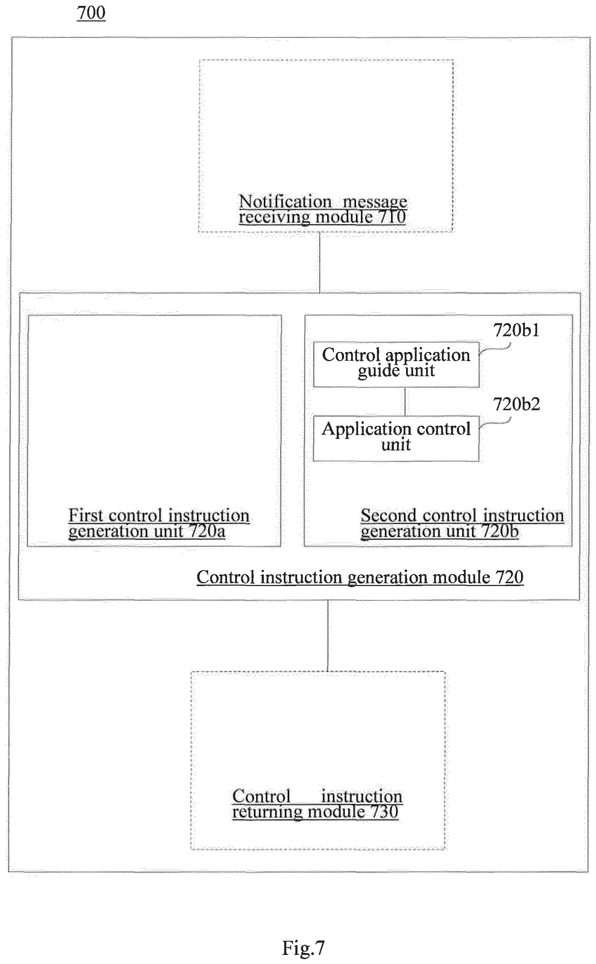

Fig.7 is a block diagram showing a terminal for remote intelligent control according to an exemplary embodiment. The terminal for remote intelligent control may be implemented with software, hardware or a combination of the both, as a part or the whole of an electronic device. The terminal 700 for remote intelligent control may include: a notification message receiving module 710, a control instruction generation module 720 and a control instruction returning module 730.

The notification message receiving module 710 is configured to receive a notification message pushed from a router, wherein the notification message is generated according to a trigger event acquired by the router.

The control instruction generation module 720 is configured to generate a corresponding control instruction according to the notification message.

The control instruction returning module 730 is configured to return the control instruction to the router, so as to control a second terminal coupled to the router.

Optionally, the control instruction generation module 720 includes: a first control instruction generation unit 720a, and/or, a second control instruction generation unit 720b.

The first control instruction generation unit 720a is configured to generate the corresponding control instruction by selecting a control option, wherein the notification message includes at least one control option.

The second control instruction generation unit 720b includes:
a control application guide unit 720b1, configured to initiate a corresponding application program according to the notification message; and
a application control unit 720b2, configured to generate the control instruction through the control application program.

Optionally, the control instruction includes contents of a video, a picture and/or a text.

Accordingly, in the router and terminal for remote intelligent control provided by this embodiment, through the router, a trigger event of a second terminal is acquired and a corresponding notification message is generated according to the trigger event. Then, the notification message is pushed to a first terminal at a remote location through the router. The first terminal at the remote location receives the notification message pushed from the router, and learns a trigger event acquired by the router. The first terminal generates a corresponding control instruction according to the notification message, and returns the control instruction to the router. A remote control on a second terminal which sends the trigger event is achieved through the router. Through the above method for remote intelligent control, a function of remote intelligent control may be achieved through the router by the user. The method for remote intelligent control may enrich control manners on household appliances, and provide technical basis for achieving a smart home.

For the apparatus according to the above embodiments, specific implementation of operations of the respective modules have been described in detail in the relevant embodiments of the method, and will not be repeated herein.

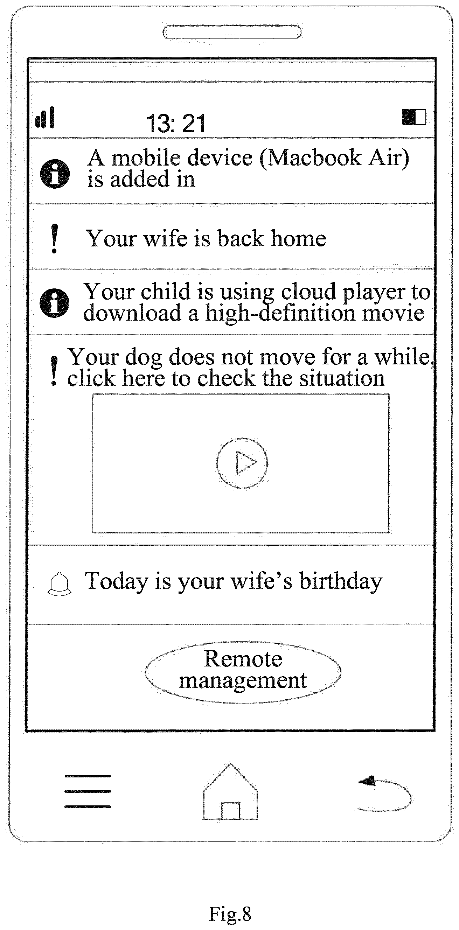

Fig.8 is a schematic view showing an interface of a terminal for remote intelligent control according to an exemplary embodiment. In this embodiment, the terminal for remote intelligent control is a mobile terminal. As shown in Fig.8, the mobile terminal receives a notification message sent from a router, and displays it on its interface. Depending to different types of the notification messages, different icons are prompted in the interface. Based on the interface shown in Fig.8, three application situations are described as examples.

### Birthday wishes for wife:

In this example of application situations, the user preset with the router that a notification message needs to be pushed on his wife's birthday. When the router detects that the current time satisfies the trigger condition preset from the user, the router acquires a preset trigger event, pushes the generated corresponding notification message to the mobile terminal of the user. After the mobile terminal of the user receives the notification message, the mobile terminal of the user prompts a notification "Today is your wife's birthday" in the interface as shown in Fig.8. After he receives the prompted notification, the user initiates an application program for a camera on the mobile terminal and records a video of birthday wishes, then adds the video of birthday wishes to a control instruction to be returned, and sets the control instruction as playing the video after his wife comes home. After the user sets the control instruction, the user returns the control instruction to the router. Accordingly, the recorded video of birthday wishes is sent to a storage space of the router or a cloud storage space coupled to the router.

When his wife comes home, the router recognized that she comes home by detecting information of a terminal device that is added into the family wifi. The router acquires the trigger event, generates a corresponding notification message, and the notification message is pushed to the user's mobile terminal. After the user's mobile terminal receives the notification message, the user's mobile terminal displays the notification "Your wife comes home" as shown in the interface in Fig.8. After the user receives the notification, the user clicks the notification, to generate a control instruction to play the video, and returns the control instruction to the router. After the router receives the control instruction, the router turns on the smart television being coupled to the router, and plays the previously recorded video of birthday wishes.

### Management on children's operations:

In this example of application situations, the router receives a control signal that is sent from a certain terminal device to the router and requests for downloading a high-definition movie through the cloud player. The router recognizes that the operator of the terminal device is the user's child by detecting information of the terminal device. Then, the router determines that this trigger event satisfies a trigger condition, acquires the trigger event, generates a corresponding notification message, and pushes the notification message to the user's mobile terminal. After the user's mobile terminal receives the notification message, the user's mobile terminal displays the notification "Your child is using cloud player to download a high-definition movie" shown in the interface in Fig.8. After the user receives the notification, the user may click the notification to check relevant information of the movie being downloaded. If the user considers the movie being downloaded is not appropriate for children to watch, the user may send a control instruction to the router, so as to control the router to cease the download of the movie.

### Real-time monitoring on pets:

In this example of application situations, a camera is installed in the housing to monitor pets in real time. The camera may access a home LAN, and is coupled to the router. When the camera monitors that a pet does not move exceeding a preset length of time, the camera triggers a trigger event, and sends the trigger event to the router. The router acquires the trigger event, and generates a corresponding notification message, and pushes the notification message to the user's mobile terminal. After the user's mobile terminal receives the notification message, the user's mobile terminal displays the alarm notification "Your dog does not move for a while, click here to check the situation" as shown in the interface in Fig.8, accompanied with a warning sound to alert the user. Meanwhile, as shown in Fig.8, a video stream interface is also provided in the alarm notification. The user may click the video stream interface to establish a link for transferring video stream from the camera in the housing, in order to achieve a real-time monitoring on pets at home.

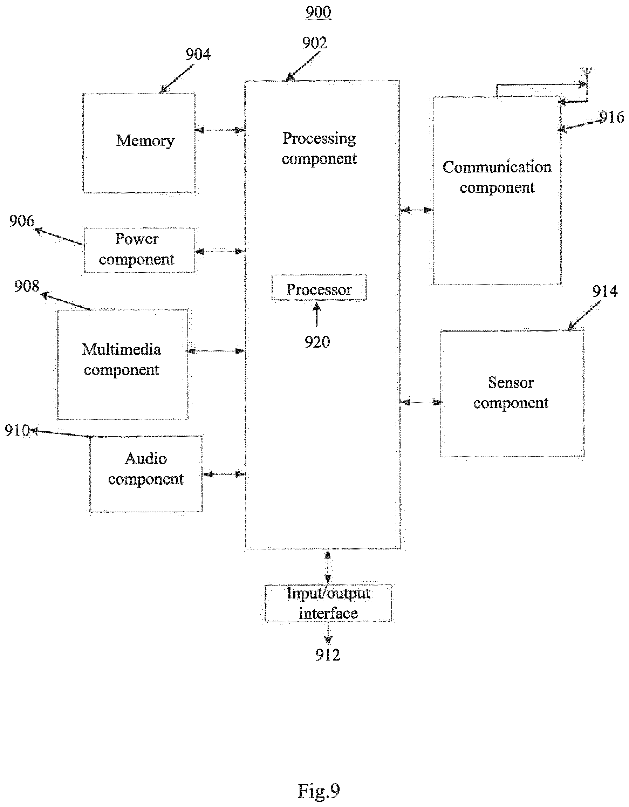

Fig.9 is a block diagram showing a device for remote intelligent control according to an exemplary embodiment. For example, the device 900 may be a mobile phone, a computer, a digital broadcast terminal, a messaging device, a gaming console, a tablet, a medical device, exercise equipment, a personal digital assistant, and the like.

As shown in Fig.9, the device 900 may include one or more of the following components: a processing component 902, a memory 904, a power component 906, a multimedia component 908, an audio component 910, an input/output (I/O) interface 912, a sensor component 914, and a communication component 916.

The processing component 902 typically controls overall operations of the device 900, such as the operations associated with display, telephone calls, data communications, camera operations, and recording operations. The processing component 902 may include one or more processors 920 to execute instructions to perform all or a part of the steps in the above described methods. Moreover, the processing component 902 may include one or more modules which facilitate the interaction between the processing component 902 and other components. For instance, the processing component 902 may include a multimedia module to facilitate the interaction between the multimedia component 908 and the processing component 902.

The memory 904 is configured to store various types of data to support the operation of the device 900. Examples of such data include instructions for any applications or methods operated on the device 900, contact data, phonebook data, messages, pictures, video, etc. The memory 904 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 906 provides power to various components of the device 900. The power component 906 may include a power management system, one or more power sources, and any other components associated with the generation, management, and distribution of power in the device 900.

The multimedia component 908 includes a screen providing an output interface between the device 900 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 908 includes a front camera and/or a rear camera. The front camera and the rear camera may receive external multimedia data while the device 900 is in an operation mode, such as a photographing mode or a video mode. Each of the front camera and the rear camera may be a fixed optical lens system or have focus and optical zoom capability.

The audio component 910 is configured to output and/or input audio signals. For example, the audio component 910 includes a microphone ("MIC") configured to receive an external audio signal when the device 900 is in an operation mode, such as a call mode, a recording mode, and a voice recognition mode. The received audio signal may be further stored in the memory 904 or transmitted via the communication component 916. In some embodiments, the audio component 910 further includes a speaker to output audio signals.

The I/O interface 912 provides an interface between the processing component 902 and peripheral interface modules, such as a keyboard, a click wheel, buttons, and the like. The buttons may include, but are not limited to, a home button, a volume button, a starting button, and a locking button.

The sensor component 914 includes one or more sensors to provide status assessments of various aspects of the device 900. For instance, the sensor component 914 may detect an open/closed status of the device 900, relative positioning of components, e.g., the display and the keypad, of the device 900, a change in position of the device 900 or a component of the device 900, a presence or absence of user contact with the device 900, an orientation or an acceleration/deceleration of the device 900, and a change in temperature of the device 900. The sensor component 914 may include a proximity sensor configured to detect the presence of nearby objects without any physical contact. The sensor component 914 may also include a light sensor, such as a CMOS or CCD image sensor, for use in imaging applications. In some embodiments, the sensor component 914 may also include an accelerometer sensor, a gyroscope sensor, a magnetic sensor, a pressure sensor, or a temperature sensor.

The communication component 916 is configured to facilitate communication, wired or wirelessly, between the device 900 and other devices. The device 900 may access a wireless network based on a communication standard, such as WiFi, 2G, or 3G, or a combination thereof. In one exemplary embodiment, the communication component 916 receives a broadcast signal or broadcast associated information from an external broadcast management system via a broadcast channel. In one exemplary embodiment, the communication component 916 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 900 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 904, executable by the processor 920 in the device 900, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium, when instructions in the storage medium are executed by the processor of the device 900, causes the device 900 to perform the method for remote intelligent control as shown in Fig.1, wherein the method includes:
acquiring a trigger event;
generating a notification message according to the trigger event;
pushing the notification message to at least one first terminal;
receiving a control instruction returned by the said at least one first terminal, wherein the control instruction i generated according to the notification message; and
controlling a second terminal corresponding to the control instruction according to the control instruction.

In addition, a non-transitory computer readable storage medium, when instructions in the storage medium are executed by the processor of the device 900, causes the device 900 to perform the method for remote intelligent control as shown in Fig.4, wherein the method includes:
receiving a notification message pushed from a router, wherein the notification message is generated according to a trigger event acquired by the router;
generating a corresponding control instruction according to the notification message; and
returning the control instruction to the router, so as to control a second terminal coupled to the router.

After consideration of the specification and practice of the disclosure herein, other embodiments according to the present disclosure may be easily envisioned by those skilled in the art. This application is intended to cover any variations, usages or adaptive modifications of the present disclosure. These variations, usages or adaptive modifications follows the general principle of the present disclosure and includes common knowledge or conventional technical means in the related art which are not disclosed in the present disclosure. The specification and embodiments are considered merely as illustrative, and the true scope of the present disclosure is specified by the following claims.

It should be understood that the present disclosure is not limited to the specific structures that have been described in the above and illustrated in the accompany drawings, and various modifications and alterations may be made to the present disclosure without departing from the definition of the invention provided by the appended claims.

## Claims

1. A method for remote intelligent control, used in a router, wherein the method comprises:
acquiring (102) a trigger event;
generating (104) a notification message according to the trigger event;
pushing (106) the notification message to at least one first terminal;
receiving (108) a control instruction returned by the at least one first terminal, wherein the control instruction is generated according to the notification message; and
controlling (110) a second terminal corresponding to the control instruction according to the control instruction; **characterised in that** the step of pushing (106) the notification message to the at least one first terminal comprises pushing the notification message to at least a first terminal corresponding to the trigger event, according to the trigger event, such that notification messages are respectively pushed to different first terminals, depending on different trigger events.

2. The method of claim 1, wherein a correlation list between different types of notification messages and different first terminals is preset in the router, the notification messages are classified in the router, and respective notification messages are pushed to the corresponding first terminals, according to the correlation list.

3. The method of claim 1, wherein the acquiring the trigger event comprises:
receiving (201) a status information of the second terminal sent from the second terminal;
determining (202) whether the status information of the second terminal satisfies a trigger condition for the trigger event; and
acquiring (203) the trigger event according to the status information of the second terminal, if the status information of the second terminal satisfies the trigger condition for the trigger event;
or,
determining (211) whether a preset trigger condition for the trigger event is satisfied; and
acquiring (212) a preset trigger event, if the preset trigger condition for the trigger event is satisfied.

4. The method of claim 1, wherein the generating the notification message according to the trigger event comprises:
determining (301) whether the trigger event belongs to a preset trigger event push list; and
generating (302) the notification message according to the trigger event, if the trigger event belongs to the preset trigger event push list.

5. The method of claim 1, wherein the notification message comprises contents of a video, a picture and/or a text that is acquired according to the trigger event.

6. The method of claim 1 or 2, wherein the router is in a same LAN environment with the second terminal.

7. A router (600) for remote intelligent control, wherein the router comprises:
a trigger event acquiring module (610), configured to acquire a trigger event;
a notification message generation module (620), configured to generate a notification message according to the trigger event;
a notification message pushing module (630), configured to push the notification message to at least one first terminal;
a control instruction receiving module (640), configured to receive a control instruction returned by the at least one first terminal, wherein the control instruction is generated according to the notification message; and
a terminal control module (650), configured to control a second terminal corresponding to the control instruction according to the control instruction, **characterised in that** the pushing module (630) configured to push the notification message to the at least one first terminal is further configured to push the notification message to at least a first terminal corresponding to the trigger event, according to the trigger event, such that notification messages are respectively pushed to different first terminals, depending on different trigger events.

8. The router of claim 7, wherein the trigger event acquiring module (610) comprises: a first event acquiring unit (610a), and/or, a second event acquiring unit (610b),
wherein the first event acquiring unit comprises:
a first terminal status receiving unit (610a1), configured to receive status information of the second terminal sent from the second terminal;
a first trigger event determination unit (610a2), configured to determine whether the status information of the second terminal satisfies a trigger condition for the trigger event; and
a first trigger event acquiring unit (610a3), configured to acquire the trigger event according to the status information of the second terminal, if the status information of the second terminal satisfies the trigger condition for the trigger event; and
the second event acquiring unit (610b) comprises:
a second trigger event determination unit (610b1), configured to determine whether a preset trigger condition for the trigger event is satisfied; and
a second trigger event acquiring unit (610b2), configured to acquire a preset trigger event, if the preset trigger condition for the trigger event is satisfied.

9. The router of claim 7, wherein the notification message generation module (620) comprises:
a trigger event screen unit (620a), configured to determine whether the trigger event belongs to a preset trigger event push list; and
a notification message generation unit (620b), configured to generate the notification message according to the trigger event, if the trigger event belongs to the preset trigger event push list.

10. A computer program, which when executing on a processor of a router, performs a method according to any one of claims 1 to 6.

## Patentansprüche

1. Verfahren zur intelligenten Fernsteuerung, in einem Router angewendet, wobei das Verfahren Folgendes beinhaltet:
Erfassen (102) eines Trigger-Ereignisses;
Erzeugen (104) einer Mitteilungsnachricht gemäß dem Trigger-Ereignis;
Pushen (106) der Mitteilungsnachricht auf wenigstens ein erstes Endgerät;
Empfangen (108) eines von dem wenigstens einen ersten Endgerät zurückgesendeten Steuerbefehls, wobei der Steuerbefehl gemäß der Mitteilungsnachricht erzeugt wird; und
Steuern (110) eines zweiten Endgeräts entsprechend dem Steuerbefehl gemäß dem Steuerbefehl;
**dadurch gekennzeichnet, dass** der Schritt des Pushens (106) der Mitteilungsnachricht auf das wenigstens eine erste Endgerät das Pushen der Mitteilungsnachricht auf wenigstens ein erstes Endgerät entsprechend dem Trigger-Ereignis, gemäß dem Trigger-Ereignis, beinhaltet, so dass Mitteilungsnachrichten jeweils auf unterschiedliche erste Endgeräte je nach unterschiedlichen Trigger-Ereignissen gepusht werden.

2. Verfahren nach Anspruch 1, wobei eine Korrelationsliste zwischen unterschiedlichen Typen von Mitteilungsnachrichten und unterschiedlichen ersten Endgeräten in dem Router voreingestellt ist, die Mitteilungsnachrichten in dem Router klassifiziert werden und jeweilige Mitteilungsnachrichten auf die entsprechenden ersten Endgeräte gemäß der Korrelationsliste gepusht werden.

3. Verfahren nach Anspruch 1, wobei das Erfassen des Trigger-Ereignisses Folgendes beinhaltet:
Empfangen (201) einer vom zweiten Endgerät gesendeten Statusinformation über das zweite Endgerät;
Feststellen (202), ob die Statusinformation des zweiten Endgeräts eine Trigger-Bedingung für das Trigger-Ereignis erfüllt; und
Erfassen (203) des Trigger-Ereignisses gemäß der Statusinformation des zweiten Endgeräts, wenn die Statusinformation des zweiten Endgeräts die Trigger-Bedingung für das Trigger-Ereignis erfüllt; oder
Feststellen (211), ob eine voreingestellte Trigger-Bedingung für das Trigger-Ereignis erfüllt ist; und
Erfassen (212) eines voreingestellten Trigger-Ereignisses, wenn die voreingestellte Trigger-Bedingung für das Trigger-Ereignis erfüllt ist.

4. Verfahren nach Anspruch 1, wobei das Erzeugen der Mitteilungsnachricht gemäß dem Trigger-Ereignis Folgendes beinhaltet:
Feststellen (301), ob das Trigger-Ereignis zu einer voreingestellten Trigger-Ereignis-Push-Liste gehört; und
Erzeugen (302) der Mitteilungsnachricht gemäß dem Trigger-Ereignis, wenn das Trigger-Ereignis zu der voreingestellten Trigger-Ereignis-Push-Liste gehört.

5. Verfahren nach Anspruch 1, wobei die Mitteilungsnachricht Inhalt eines Videos, eines Bildes und/oder eines Texts umfasst, das/der gemäß dem Trigger-Ereignis erfasst wird.

6. Verfahren nach Anspruch 1 oder 2, wobei der Router in einer selben LAN-Umgebung ist wie das zweite Endgerät.

7. Router (600) für intelligente Fernsteuerung, wobei der Router Folgendes umfasst:
ein Trigger-Ereigniserfassungsmodul (610), konfiguriert zum Erfassen eines Trigger-Ereignisses;
ein Mitteilungsnachricht-Erzeugungsmodul (620), konfiguriert zum Erzeugen einer Mitteilungsnachricht gemäß dem Trigger-Ereignis;
ein Mitteilungsnachricht-Push-Modul (630), konfiguriert zum Pushen der Mitteilungsnachricht auf wenigstens ein erstes Endgerät;
ein Steuerbefehlempfangsmodul (640), konfiguriert zum Empfangen eines von dem wenigstens einen Endgerät zurückgegebenen Steuerbefehls, wobei der Steuerbefehl gemäß der Mitteilungsnachricht erzeugt wird; und
ein Endgerätsteuermodul (650), konfiguriert zum Steuern eines zweiten Endgeräts entsprechend dem Steuerbefehl gemäß dem Steuerbefehl,
**dadurch gekennzeichnet, dass** das Push-Modul (630), konfiguriert zum Pushen der Mitteilungsnachricht auf das wenigstens eine Endgerät, ferner zum Pushen der Mitteilungsnachricht auf wenigstens ein erstes Endgerät entsprechend dem Trigger-Ereignis, gemäß dem Trigger-Ereignis, konfiguriert ist, so dass Mitteilungsnachrichten jeweils auf unterschiedliche erste Endgeräte je nach unterschiedlichen Trigger-Ereignissen gepusht werden.

8. Router nach Anspruch 7, wobei das Trigger-Ereigniserfassungsmodul (610) Folgendes umfasst: eine erste Ereigniserfassungseinheit (610a) und/oder eine zweite Ereigniserfassungseinheit (610b),
wobei die erste Ereigniserfassungseinheit Folgendes umfasst:
eine erste Endgerätstatusempfangseinheit (610a1), konfiguriert zum Empfangen von von dem zweiten Endgerät gesendeten Statusinformationen über das zweite Endgerät;
eine erste Trigger-Ereignisfeststellungseinheit (610a2), konfiguriert zum Feststellen, ob die Statusinformation des zweiten Endgeräts eine Trigger-Bedingung für das Trigger-Ereignis erfüllt; und
eine erste Trigger-Ereigniserfassungseinheit (610a3), konfiguriert zum Erfassen des Trigger-Ereignisses gemäß der Statusinformation des zweiten Endgeräts, wenn die Statusinformation des zweiten Endgeräts die Trigger-Bedingung für das Trigger-Ereignis erfüllt; und
die zweite Ereigniserfassungseinheit (610b) Folgendes umfasst:
eine zweite Trigger-Ereignisfeststellungseinheit (610b1), konfiguriert zum Feststellen, ob eine voreingestellte Trigger-Bedingung für das Trigger-Ereignis erfüllt ist; und
eine zweite Trigger-Ereigniserfassungseinheit (610b2), konfiguriert zum Erfassen eines voreingestellten Trigger-Ereignisses, wenn die voreingestellte Trigger-Bedingung für das Trigger-Ereignis erfüllt ist.

9. Router nach Anspruch 7, wobei das Mitteilungsnachricht-Erzeugungsmodul (620) Folgendes umfasst:
eine Trigger-Ereignis-Bildschirmeinheit (620a), konfiguriert zum Feststellen, ob das Trigger-Ereignis zu einer voreingestellten Trigger-Ereignis-Push-Liste gehört; und
eine Mitteilungsnachricht-Erzeugungseinheit (620b), konfiguriert zum Erzeugen der Mitteilungsnachricht gemäß dem Trigger-Ereignis, wenn das Trigger-Ereignis zu der voreingestellten Trigger-Ereignis-Push-Liste gehört.

10. Computerprogramm, das bei Abarbeitung auf einem Prozessor eines Routers ein Verfahren nach einem der Ansprüche 1 bis 6 durchführt.

## Revendications

1. Procédé de commande intelligente à distance, utilisé dans un routeur, où le procédé comprend :
acquérir (102) un événement de déclenchement ;
générer (104) un message de notification conformément à l'événement de déclenchement ;
envoyer en push (106) le message de notification à au moins un premier terminal ;
recevoir (108) une instruction de commande renvoyée par le au moins un premier terminal, où l'instruction de commande est générée conformément au message de notification ; et
commander (110) un deuxième terminal correspondant à l'instruction de commande conformément à l'instruction de commande ;
**caractérisé en ce que**
l'étape consistant à envoyer en push (106) le message de notification à le au moins un premier terminal comprend envoyer en push le message de notification à au moins un premier terminal correspondant à l'événement de déclenchement, conformément à l'événement de déclenchement, de telle sorte que les messages de notification sont respectivement envoyés en push à des premiers terminaux différents, en fonction d'événements de déclenchement différents.

2. Procédé selon la revendication 1, dans lequel une liste de corrélation entre différents types de messages de notification et différents premiers terminaux est préréglée dans le routeur, les messages de notification sont classifiés dans le routeur et des messages de notification respectifs sont envoyés en push aux premiers terminaux correspondants, conformément à la liste de corrélation.

3. Procédé selon la revendication 1, dans lequel l'acquisition de l'événement de déclenchement comprend :
recevoir (201) une information d'état du deuxième terminal envoyée du deuxième terminal ;
déterminer (202) si l'information d'état du deuxième terminal satisfait à une condition de déclenchement pour l'événement de déclenchement ; et
acquérir (203) l'événement de déclenchement conformément à l'information d'état du deuxième terminal, si l'information d'état du deuxième terminal satisfait à la condition de déclenchement pour l'événement de déclenchement ;
ou bien,
déterminer (211) si une condition de déclenchement préréglée pour l'événement de déclenchement est satisfaite ;
et
acquérir (212) un événement de déclenchement préréglé si la condition de déclenchement préréglée pour l'événement de déclenchement est satisfaite.

4. Procédé selon la revendication 1, dans lequel la génération du message de notification conformément à l'événement de déclenchement comprend :
déterminer (301) si l'événement de déclenchement appartient à une liste de push d'événements de déclenchement préréglée ; et
générer (302) le message de notification conformément à l'événement de déclenchement, si l'événement de déclenchement appartient à la liste de push d'événements de déclenchement préréglée.

5. Procédé selon la revendication 1, dans lequel le message de notification comprend un contenu d'une vidéo, d'une image et/ou d'un texte qui est acquis conformément à l'événement de déclenchement.

6. Procédé selon la revendication 1 ou 2, dans lequel le routeur est dans un même environnement de réseau local que le deuxième terminal.

7. Routeur (600) de commande intelligente à distance, où le routeur comprend :
un module d'acquisition d'événement de déclenchement (610), configuré pour acquérir un événement de déclenchement ;
un module de génération de message de notification (620), configuré pour générer un message de notification conformément à l'événement de déclenchement ;
un module de push de message de notification (630), configuré pour envoyer en push le message de notification à au moins un premier terminal ;
un module de réception d'instruction de commande (640), configuré pour recevoir une instruction de commande renvoyée par le au moins un premier terminal, où l'instruction de commande est générée conformément au message de notification ; et
un module de commande de terminal (650), configuré pour commander un deuxième terminal correspondant à l'instruction de commande conformément à l'instruction de commande ;
**caractérisé en ce que**
le module de push (630) configuré pour envoyer en push le message de notification à le au moins un premier terminal est configuré en outre pour envoyer en push le message de notification à au moins un premier terminal correspondant à l'événement de déclenchement, conformément à l'événement de déclenchement, de telle sorte que les messages de notification sont respectivement envoyés en push à des premiers terminaux différents, en fonction d'événements de déclenchement différents.

8. Routeur selon la revendication 7, dans lequel le module d'acquisition d'événement de déclenchement (610) comprend : une première unité d'acquisition d'événement (610a) et/ou une deuxième unité d'acquisition d'événement (610b),
dans lequel la première unité d'acquisition d'événement comprend :
une première unité de réception d'état de terminal (610a1), configurée pour recevoir une information d'état du deuxième terminal envoyée du deuxième terminal ;
une première unité de détermination d'événement de déclenchement (610a2), configurée pour déterminer si l'information d'état du deuxième terminal satisfait à une condition de déclenchement pour l'événement de déclenchement ; et
une première unité d'acquisition d'événement de déclenchement (610a3), configurée pour acquérir l'événement de déclenchement conformément à l'information d'état du deuxième terminal, si l'information d'état du deuxième terminal satisfait à la condition de déclenchement pour l'événement de déclenchement ; et
la deuxième unité d'acquisition d'événement (610b) comprend :
une deuxième unité de détermination d'événement de déclenchement (610b1), configurée pour déterminer si une condition de déclenchement préréglée pour l'événement de déclenchement est satisfaite ; et
une deuxième unité d'acquisition d'événement de déclenchement (610b2), configurée pour acquérir un événement de déclenchement préréglé, si la condition de déclenchement préréglée pour l'événement de déclenchement est satisfaite.

9. Routeur selon la revendication 7, dans lequel le module de génération de message de notification (620) comprend :
une unité de criblage d'événement de déclenchement (620a), configurée pour déterminer si l'événement de déclenchement appartient à une liste de push d'événements de déclenchement préréglée ; et
une unité de génération de message de notification (620b) configurée pour générer le message de notification conformément à l'événement de déclenchement, si l'événement de déclenchement appartient à la liste de push d'événements de déclenchement préréglée.

10. Programme informatique qui, lorsque exécuté sur un processeur d'un routeur, met en oeuvre un procédé selon l'une quelconque des revendications 1 à 6.
